# EUROPEAN PATENT APPLICATION

(11) **EP 4 380 275 A1**
(43) Date of publication of application: **05.06.2024**
(21) Application number: 22848631.2
(22) Date of filing: 28.07.2022
(51) Int. Cl.: H04W 72/04, H04W 72/12, H04L 5/00

(54) **UPLINK TRANSMISSION METHOD AND APPARATUS, AND TERMINAL**

(30) Priority: 30.07.2021 CN 202110875697
(71) Applicant: Vivo Mobile Communication Co., Ltd., Dongguan, Guangdong 523863 (CN)
(72) Inventor: LI, Na, Dongguan, Guangdong 523863 (CN); ZENG, Chaojun, Dongguan, Guangdong 523863 (CN)
(74) Representative: Conti, Marco
(86) International application number: PCT/CN2022/108584
(87) International publication number: WO 2023/006026

(57) **Abstract**

This application discloses an uplink transmission method and apparatus, and a terminal, and pertains to the field of communications technologies. The uplink transmission method, performed by a terminal, includes: determining a cell in which a transmission of a first PUCCH is located; and in a case of overlapping time domain resources for the first PUCCH and a second uplink channel, determining whether to transmit the first PUCCH and/or the second uplink channel, based on semi-persistent uplink and downlink configuration information and/or an SFI, where the second uplink channel includes a second PUCCH and/or a second PUSCH.

## Description

### CROSS-REFERENCE TO RELATED APPLICATIONS

This application claims priority to Chinese Patent Application No. 202110875697.7 filed in China on July 30, 2021, which is incorporated herein by reference in its entirety.

### TECHNICAL FIELD

This application relates to the field of communications technologies, and more specifically, to an uplink transmission method and apparatus, and a terminal.

### BACKGROUND

When a terminal (User Equipment, UE) is configured with physical uplink control channel (Physical Uplink Control Channel, PUCCH) resources on a plurality of cells, the UE needs to perform PUCCH carrier switching. In addition, the UE also needs to perform PUCCH resource overriding and intra-UE multiplexing (intra-UE multiplexing), and determine a transmission status based on a slot format indicator (Slot Format Indicator, SFI), and so on. An execution order of the functional procedures of the UE needs to be determined.

### SUMMARY

Embodiments of this application provide an uplink transmission method and apparatus, and a terminal, so as to improve the effectiveness of a communications system.

According to a first aspect, an embodiment of this application provides an uplink transmission method, which is performed by a terminal. The method includes:
determining a cell in which a transmission of a first PUCCH is located; and
in a case of overlapping time domain resources for the first PUCCH and a second uplink channel, determining whether to transmit the first PUCCH and/or the second uplink channel, based on semi-persistent uplink and downlink configuration information and/or an SFI, where the second uplink channel includes a second PUCCH and/or a second PUSCH.

According to a second aspect, an embodiment of this application provides an uplink transmission apparatus, which is applied to a terminal. The apparatus includes:
a determining module, configured to determine a cell in which a transmission of a first PUCCH is located; and
a processing module, configured to: in a case of overlapping time domain resources for the first PUCCH and a second uplink channel, determine whether to transmit the first PUCCH and/or the second uplink channel, based on semi-persistent uplink and downlink configuration information and/or an SFI, where the second uplink channel includes a second PUCCH and/or a second PUSCH.

According to a third aspect, an embodiment of this application provides a terminal. The terminal includes a processor, a memory, and a program or instructions stored on the memory and capable of running on the processor, where when the program or instructions are executed by the processor, the steps of the method according to the first aspect are implemented.

According to a fourth aspect, a terminal is provided, which includes a processor and a communications interface. The processor is configured to: determine a cell in which a transmission of a first PUCCH is located; and in a case of overlapping time domain resources for the first PUCCH and a second uplink channel, determine whether to transmit the first PUCCH and/or the second uplink channel, based on semi-persistent uplink and downlink configuration information and/or an SFI, where the second uplink channel includes a second PUCCH and/or a second PUSCH.

According to a fifth aspect, a readable storage medium is provided. The readable storage medium stores a program or instructions, where when the program or instructions are executed by a processor, the steps of the method according to the first aspect are implemented.

According to a sixth aspect, a chip is provided. The chip includes a processor and a communications interface. The communications interface is coupled to the processor, and the processor is configured to run a program or instructions to implement the method according to the first aspect.

According to a seventh aspect, a computer program/program product is provided. The computer program/program product is stored in a non-volatile storage medium, and the program/program product is executed by at least one processor to implement the steps of the method according to the first aspect.

According to an eighth aspect, a communications device is provided, which is configured to perform the steps of the method according to the first aspect.

In the embodiments of this application, an execution order of the steps performed when the UE is configured with PUCCH carrier switching is provided, so as to improve the effectiveness of a communications system.

### BRIEF DESCRIPTION OF DRAWINGS

FIG. 1 is a schematic diagram of a wireless communications system;
FIG. 2 is a schematic diagram of a slot (slot) including downlink, uplink, and flexible OFDM symbols;
FIG. 3 is a schematic flowchart of an uplink transmission method according to an embodiment of this application;
FIG. 4 is a schematic diagram of a process of PUCCH resource overriding according to an embodiment of this application;
FIG. 5 is a schematic diagram of a semi-persistent uplink configuration and/or an SFI configuration according to an embodiment of this application;
FIG. 6 is a schematic diagram depicting PUCCH resources being configured on both CC 0 and CC 1 according to an embodiment of this application;
FIG. 7 is a schematic diagram of determining, based on an indication of DCI, a cell in which a PUCCH is located according to an embodiment of this application;
FIG. 8 is a schematic diagram depicting PUCCH resources being configured on a plurality of cells according to an embodiment of this application;
FIG. 9 is a schematic structural diagram of an uplink transmission apparatus applied to a terminal according to an embodiment of this application;
FIG. 10 is a schematic structural diagram of a communications device according to an embodiment of this application; and
FIG. 11 is a schematic diagram of composition of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the scope of protection of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that the technology described in the embodiments of this application is not limited to a long term evolution (Long Term Evolution, LTE)/LTE-advanced (LTE-Advanced, LTE-A) system, and may also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. A new radio (New Radio, NR) system is described in the following description by way of example, and an NR terminology is used in most of the following description. However, the technologies can also be applied to applications other than the NR system application, such as a 6th generation (6th Generation, 6G) communications system.

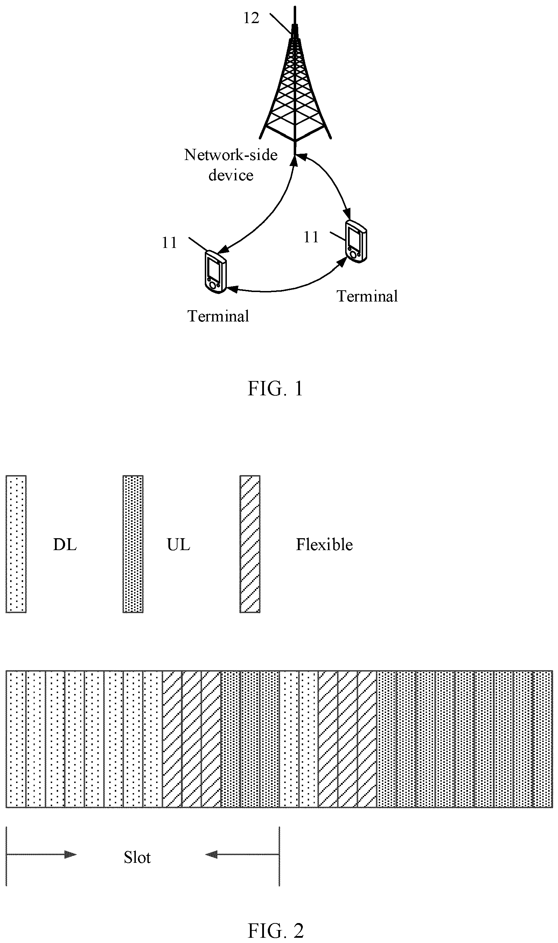

FIG. 1 is a block diagram of a wireless communications system to which an embodiment of this application is applicable. The wireless communications system includes a terminal 11 and a network-side device 12. The terminal 11 may also be referred to as a terminal device or a user terminal. The terminal 11 may be a terminal-side device including a mobile phone, a tablet personal computer (Tablet Personal Computer, TPC), a laptop computer (Laptop Computer, LC) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device, WD) or a vehicle user equipment (VUE), a pedestrian user equipment (Pedestrian User Equipment, PUE), smart home (home devices having wireless communication capabilities, such as a refrigerator, a television, a washing machine, or furniture), and the like. The wearable device includes a smart watch, a smart band, smart headphones, smart glasses, smart jewelry (a smart bangle, a smart bracelet, a smart ring, a smart necklace, a smart anklet, a smart anklet, smart ankle bracelet, and the like), a smart wristband, smart clothing, a game console, and the like. It should be noted that a specific type of the terminal 11 is not limited in the embodiments of this application. The network-side device 12 may be a base station or a core network device. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved Node B (eNB), a home Node B, a home evolved Node B, a WLAN (Wireless Local Area Networks, WLAN) access point, a wireless fidelity (Wireless Fidelity, WiFi) node, a transmissionreception point (Transmitting Receiving Point, TRP), or another appropriate term in the art. Provided that the same technical effects are achieved, the base station is not limited to a particular technical term. It should be noted that in the embodiments of this application, the base station in the NR system is merely used as an example, but does not limit a specific type of the base station.

Compared with previous mobile communications systems, a 5th generation (5th Generation, 5G) mobile communications system needs to adapt to more diverse scenarios and service requirements. Main scenarios of NR include enhanced mobile broadband (eMBB), massive machine type communications (mMTC), and ultra-reliable low-latency communications (Ultra Reliable and Low Latency Communications, URLLC). In these scenarios, requirements for high reliability, low latency, large bandwidth, and wide coverage are placed on the system.

These different services have different quality of service (QoS) requirements. For example, URLLC supports low-latency and high-reliability services. To achieve higher reliability, data needs to be transmitted at a lower bit rate, and channel state information (Channel State Information, CSI) needs to be fed back faster and more accurately. The eMBB services meet a high throughput requirement, but are less sensitive to latency and reliability than URLLC. In addition, some UEs may support services of different numerologies (numerology). UE supports both an ultra-reliable low-latency URLLC service and a large-capacity high-rate eMBB service.

In the related art, the base station can configure one or more (up to 4) PUCCH (physical uplink control channel) resource sets (PUCCH resource set) for each UE through radio resource control (Radio Resource Control, RRC) signaling. RRC configures or predefines a maximum number of bits of a payload of uplink control information (Uplink Control Information, UCI) that can be carried by each resource set (Resource Set, RESET) (for example, up to 2 bits for the first RESET, N1 and N2 bits for the second RESET and the third RESET, and up to 1,706 bits for the fourth RESET, where N1 and N2 are configured through the RRC). Each RESET can include a plurality of PUCCH resources (up to 32 PUCCH resources for the first RESET, and up to 8 PUCCH resources for each of the other RESETs). On the UE side, after receiving a physical downlink shared channel (Physical Downlink Shared Channel, PDSCH) and some physical downlink control channels (Physical Downlink Control Channel, PDCCH), the UE needs to feed back a hybrid automatic repeat request acknowledgment (Hybrid automatic repeat request acknowledgement, HARQ-ACK). In order to determine a PUCCH resource on which the feedback HARQ-ACK is located, the UE needs to first determine a slot in which the PUCCH is located, by using K1 (a timing indication from the PDSCH to the HARQ-ACK feedback) in the PDCCH scheduling the PDSCH, and then determines a RESET in which the PUCCH is located, by using the number of bits of the HARQ-ACK that needs to be fed back. For the determined RESET, a specific PUCCH resource in the RESET is determined based on a physical uplink control channel resource indicator (PUCCH resource indicator, PRI) field for the PDCCH (when the RESET includes no more than 8 resources) or the PRI and an index (first CCE index) of the first control channel element (Control Channel Element, CCE) of the PDCCH (when the RESET includes more than 8 resources). When HARQ-ACKs for a plurality of PDSCHs are fed back in one slot, the UE determines the PUCCH resource based on a PRI and a CCE index in the last downlink control information (last Downlink Control Information, last DCI) that schedules these PDSCHs.

In the related art, to reduce a peak-to-average power ratio (Peak-to-Average Power Ratio, PAPR), UE can transmit only one PUCCH or PUSCH at a time. Therefore, in a case of overlapping time domain resources for a PUCCH and a PUCCH, or of a PUCCH and a PUSCH within a PUCCH group (PUCCH group), the UE needs to resolve the problem of overlapping the time domain resources for the PUCCH and the PUCCH, or of the PUCCH and the PUSCH, or in other words, a PUCCH and PUCCH, or PUCCH and PUSCH conflict problem. For example, given the same priority, UCIs of different PUCCHs are multiplexed, or UCI carried by a PUCCH is multiplexed onto a PUSCH for transmission. Given different priorities, transmission of a low-priority PUCCH/PUSCH is canceled, and only a high-priority PUCCH/PUSCH is transmitted.

In order to achieve flexible network deployment, the NR system configures a transmission direction of each symbol in a slot by means of a slot format (slot format).

There are three definitions of the transmission direction of the slot in NR: downlink (Downlink, DL), Uplink (Uplink, UL), and flexible. When the network configures a slot or a symbol to be DL or UL, a transmission direction at that moment is definite. When the network configures a slot or a symbol to be flexible, a transmission direction at that moment is undetermined. The network can modify the transmission direction of the flexible slot or symbol through dynamic signaling, such as a dynamic slot format indicator.

As shown in FIG. 2, a slot may include downlink (downlink), uplink (uplink), and flexible (flexible) orthogonal frequency division multiplexing (orthogonal frequency division multiplexing, OFDM) symbols. A flexible symbol can be rewritten into a downlink or uplink symbol.

The SFI can indicate a format of one or more slots. The SFI is sent in a group-common physical downlink control channel (GC-PDCCH).

The SFI can flexibly change the format of a semi-persistently configured slot according to needs, so as to meet service transmission requirements.

The UE decides whether to monitor a PDCCH, based on an indication of the SFI.

The base station can semi-persistently configure one or more cell-specific slot formats for the UE through the higher-layer parameters, UL-DL-configuration-common and UL-DL-configuration-common-Set2 (optional).

The base station can also semi-persistently configure one or more UE-specific slot formats for the UE through the higher-layer parameter, UL-DL-configuration-dedicated.

The base station can rewrite a flexible symbol or slot in a semi-persistent configuration by means of the SFI carried in the GC-PDCCH.

Transmission directions implicitly indicated by a UE-specific RRC configuration are collectively referred to as measurements, including:
a periodic or semi-persistent channel state information-reference signal (CSI-RS) measurement configured by UE-specific RRC signaling, periodic CSI reporting, and an uplink or downlink transmission direction implicitly indicated by a periodic or semi-persistent sounding reference signal (Sounding Reference Signal, SRS);
physical random access channel (Physical Random Access Channel, PRACH) resources, type1 and type2 grant-free uplink transmissions, configured by the UE-specific RRC; and
for the type2 grant-free uplink transmission, only a transmission on the first activated resource is considered as UE-specific data.

UE-specific transmissions include a physical downlink shared channel (Physical Downlink Shared Channel, PDSCH), a physical uplink shared channel (Physical Uplink Shared Channel, PUSCH), an A/N feedback for the PDSCH, a DCI-triggered aperiodic measurement, and the like.

In the related art, in order to further reduce a transmission delay of the uplink control information, the feature of PUCCH carrier switching is introduced, that is, PUCCH carrier switching. In the prior art, within a PUCCH group, PUCCH resources can only be configured on one cell, that is, a primary cell (Pcell) or a primary secondary cell (PScell) or a PUCCH secondary cell (SCell). A PUCCH transmission is restricted by a semi-persistently configured or dynamically indicated slot format. For example, a PUCCH cannot be transmitted on a symbol configured as DL. Therefore, when some or all of the PUCCH resources are configured on DL symbols, the PUCCH cannot be transmitted, and UCI carried by the PUCCH can only be discarded. When the UE supports PUCCH carrier switching, within a PUCCH group, PUCCH resources can be configured on more than one cell. For example, the PUCCH resources are configured on 2 cells. At a specific time, which cell the PUCCH is transmitted on can be determined based on a specific rule or dynamic indication.

In the related art, the transmission of a PUCCH/PUSCH is restricted by the SFI (a procedure 1, determining whether the PUCCH or PUSCH can be transmitted based on the SFI). In addition, the UE further needs to handle a conflict between a PUCCH and a PUCCH or between a PUCCH and a PUSCH within the UE (a procedure 2, PUCCH overriding/intra-UE multiplexing/prioritization). Specifically, the procedure 2 is performed first, followed by the procedure 1. In the related art, PUCCH carrier switching (a procedure 3, determining a cell in which a PUCCH is located) is also supported. In this scenario, an order in which the UE should perform the above three procedures needs to be discussed.

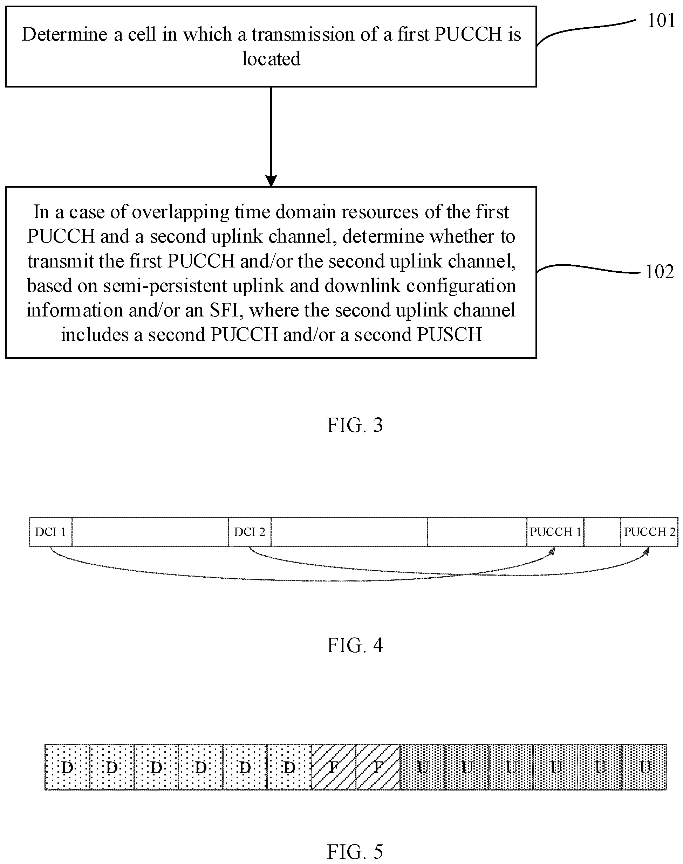

An embodiment of this application provides an uplink transmission method, which is performed by a terminal. As shown in FIG. 3, the method includes:
determining a cell in which a transmission of a first PUCCH is located; and
in a case of overlapping time domain resources for the first PUCCH and a second uplink channel, determining whether to transmit the first PUCCH and/or the second uplink channel, based on semi-persistent uplink and downlink configuration information and/or an SFI, where the second uplink channel includes a second PUCCH and/or a second PUSCH.

In the embodiments of this application, an order in which the steps are performed when the UE is configured with PUCCH carrier switching is provided, so as to improve the effectiveness of a communications system.

In some embodiments, the second uplink channel includes the second PUCCH, and if the first PUCCH and the second PUCCH are in a same cell, the first PUCCH and the second PUCCH are multiplexed.

In some embodiments, the overlapping time domain resources for the first PUCCH and a second uplink channel includes at least one of the following:
overlapping time domain resources for the first PUCCH and the second PUCCH in a same cell; and
overlapping time domain resources for the first PUCCH and the second PUCCH in different cells within a same PUCCH group.

In some embodiments, the determining a cell in which a first PUCCH is located includes:
determining the cell in which the transmission of the first PUCCH is located, based on at least one of an indication of DCI, a preset rule, the semi-persistent uplink and downlink configuration information, and the SFI.

In some embodiments, the determining a cell in which a first PUCCH is located specifically includes any one of the following:
determining the cell in which the transmission of the first PUCCH is located, based on an indication of a specific information field in the DCI; where optionally, the specific information field may be an uplink and downlink resource allocation information field, a HARQ information field, a power control information field, or the like; or
determining a cell with available PUCCH resources, based on the semi-persistent uplink and downlink configuration information and/or the SFI.

In some embodiments, if it is determined that the number of cells with available PUCCH resources is greater than 1, a cell with a largest or smallest cell identifier is selected as the cell in which the first PUCCH is located.

In some embodiments, the cell in which the transmission of the first PUCCH is located is determined based on an indication of an information field in the last DCI.

In some embodiments, after the determining a cell in which a transmission of a first PUCCH is located, the method further includes:
determining a resource index of the first PUCCH.

In some embodiments, before the determining a cell in which a transmission of a first PUCCH is located, the method further includes:
determining a resource index of the first PUCCH.

In some embodiments, the resource index of the first PUCCH is determined when a HARQ-ACK feedback is required.

In some embodiments, for a HARQ-ACK codebook formed by PDSCHs scheduled by different DCIs, it is not expected that PUCCH cells indicated by the different DCIs are different.

In some embodiments, in a case that the first PUCCH and the second PUCCH are in different cells, and a first cell in which the first PUCCH is located and a second cell in which the second PUCCH is located have different SCSs, a time unit for multiplexing of the first PUCCH is determined based an SCS of a third cell, where the third cell is selected from the first cell and the second cell.

In some embodiments, the third cell is determined based on any one of the following:
a cell in which a PUCCH is located as determined based on the indication of the DCI;
a cell of a PUCCH in which high-priority UCI is located based on the indication of the DCI;
a cell in which high-priority UCI is located;
a cell with a largest cell identifier; and
a cell with a smallest cell identifier.

In a specific implementation, FIG. 4 shows a process of PUCCH resource overriding. DCI 1 schedules UE to feed back a HARQ-ACK in a slot n. After receiving the DCI 1, the UE determines a PUCCH, for example, a PUCCH 1, to feed back the HARQ-ACK based on the number of bits of the HARQ-ACK that needs to be fed back in the slot and an indication of a PRI in the DCI 1. After the DCI 1, the UE further receives DCI 2, which also schedules the UE to feed back a HARQ-ACK in the slot n. Then the UE needs to combine a HARQ-ACK for a PDSCH scheduled by the DCI 1 and a HARQ-ACK for a PDSCH scheduled by the DCI 2 for feedback. Therefore, the UE determines the PUCCH, for example, a PUCCH 2, to feed back the HARQ-ACK based on the number of bits of the new HARQ-ACK (+ the HARQ-ACK for the PDSCH scheduled by the DCI 2) and an indication of a PRI of the DCI 2. That is, a process of continuously updating, by the UE based on the received DCI, a PUCCH resource to feed back a HARQ-ACK in a slot is referred to as PUCCH overriding.

FIG. 5 shows a semi-persistent uplink configuration and/or SFI configuration, in which each symbol may be configured/indicated as a DL symbol, a flexible symbol, or an uplink symbol. A PUCCH can be transmitted only on an uplink and/or flexible symbol. Before a transmission, it is required to determine whether a PUCCH/PUSCH can be transmitted, based on an uplink and downlink configuration of a symbol where the channel is located and/or an SFI indication. For example, if the PUCCH is on a UL symbol indicated by the SFI, the PUCCH can be transmitted. If some or all of symbols of the PUCCH are DL symbols, the PUCCH cannot be transmitted.

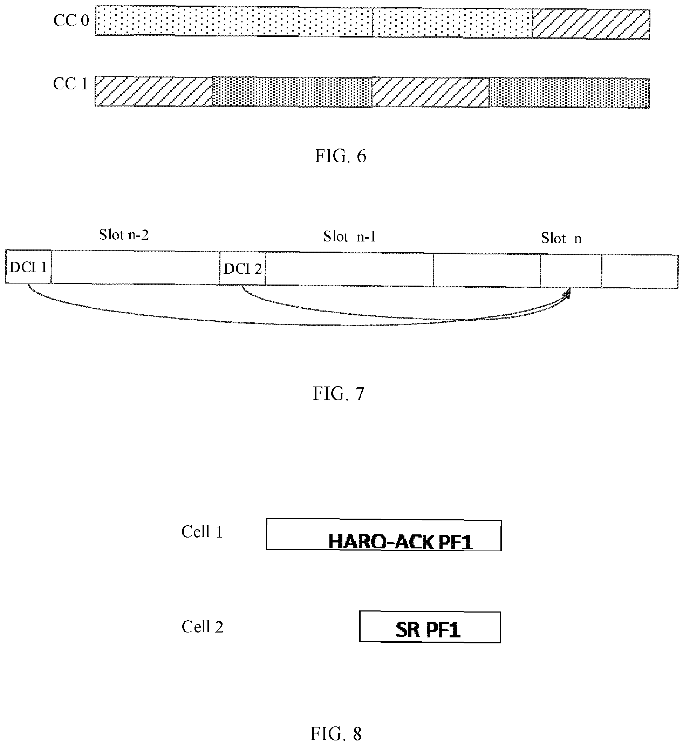

As shown in FIG. 6, PUCCH resources are configured on both control channel (Control Channel, CC) 0 and CC 1. In a specific time unit, a CC on which the UE transmits a PUCCH may be determined according to a specific method, for example, according to the indication of the DCI, and/or according to a PUCCH cell time pattern configured by the higher layer (for example, a CC with available PUCCH resources in this time slot can be determined according to the PUCCH cell time pattern configuration), or may be determined according to another method.

In another specific implementation, when the UE is configured with PUCCH resources on a plurality of CCs within a PUCCH group, the UE determines the PUCCH/PUSCH transmission according to the following embodiments:

### Embodiment 1

This embodiment includes the following steps:
Step 1: Determine a cell for a PUCCH transmission. For example, the UE may determine a cell (not consider semi-persistent uplink and downlink configuration or SFI) in which the PUCCH transmission is located in a specific time unit, based on the indication of the DCI and/or according to the preset rule (such as the PUCCH cell (resource) time pattern). For example, it is determined that the cell for the PUCCH transmission is a PUCCH cell 1.
Step 2: If there is a HARQ-ACK that needs to be fed back in a specific time unit, perform a PUCCH resource overriding procedure, that is, determine a PUCCH resource for the HARQ-ACK feedback based on the indication of the last DCI.

Optionally, for a HARQ-ACK codebook (for example, HARQ-ACKs of the same priority fed back in the same time unit) formed by PDSCHs scheduled by different DCIs, the terminal does not expect that PUCCH cells indicated by the DCI are different.

Step 3: In a case of overlapping time domain resources for a PUCCH and a PUCCH or for a PUCCH and a PUSCH, perform multiplexing or prioritization of the PUCCH and the PUCCH and/or of the PUCCH and the PUSCH, including any one of the following:
(1) supporting the multiplexing of a PUCCH and a PUCCH only when the PUCCHs are in the same cell.
(2) overlapping time domain resources for a PUCCH and a PUCCH includes overlapping time domain resources for a PUCCH and a PUCCH on the same cell and overlapping time domain resources in different cells within the same PUCCH group. Optionally, when the overlapping PUCCHs are in different cells, if the different cells have different subcarrier spacings (SCS), a time unit for PUCCH multiplexing/prioritization is determined based on an SCS of a cell 1, where the cell 1 is determined according to any one of the following methods:
   method 1: determining the PUCCH cell based on the DCI indication;
   method 2: determining a PUCCH cell in which high-priority UCI is located as determined based on the DCI indication;
   method 3: determining a cell in which high-priority UCI is located; or
   method 4: determining a cell with a largest or smallest cell index.

Step 4: Determine whether the PUCCH and PUSCH determined in step 3 can be transmitted, based on the semi-persistent uplink and downlink configuration and/or the SFI.

### Embodiment 2

This embodiment includes the following steps:
Step 1: Determine a cell for a PUCCH transmission. For example, the UE may determine a cell in which the PUCCH transmission is located in a specific time unit, based on the indication of the DCI, the preset rule, the semi-persistent uplink and downlink configuration, and/or the SFI. For example, it is determined that the cell for the PUCCH transmission is a PUCCH cell 1.
   For example, the DCI includes an information field indicating the cell in which the PUCCH is located, or a cell with available PUCCH resources is selected based on the semi-persistent uplink and downlink configuration and/or the SFI. If there are a plurality of cells with available PUCCH resources, a cell with a largest or smallest cell index may be selected.
Step 2: If there is a HARQ-ACK that needs to be fed back in a specific time unit, perform a PUCCH resource overriding procedure, that is, determine a PUCCH resource for the HARQ-ACK feedback based on the indication of the last DCI.
Step 3: In a case of overlapping time domain resources for a PUCCH and a PUCCH or for a PUCCH and a PUSCH, perform multiplexing or prioritization of the PUCCH and the PUCCH or of the PUCCH and the PUSCH.
Step 4: Determine whether the PUCCH and PUSCH determined in step 3 can be transmitted, based on the semi-persistent uplink configuration or the SFI.

### Embodiment 3

This embodiment includes the following steps:
Step 1: If there is a HARQ-ACK that needs to be fed back in a specific time unit, perform a PUCCH resource overriding procedure, that is, determine a PUCCH resource for the HARQ-ACK feedback based on the indication of the last DCI.
Step 2: Determine a cell for a PUCCH transmission. For example, the UE may determine a cell in which the PUCCH transmission is located in a specific time unit, based on the indication of the DCI, the preset rule, the semi-persistent uplink and downlink configuration, and/or the SFI. For example, it is determined that the cell for the PUCCH transmission is a PUCCH cell 1.
   Optionally, the cell in which the PUCCH is located may be determined based on the indication of the last DCI.
Step 3: In a case of overlapping time domain resources for a PUCCH and a PUCCH or for a PUCCH and a PUSCH, perform multiplexing or prioritization of the PUCCH and the PUCCH or of the PUCCH and the PUSCH.
Step 4: Determine whether the PUCCH and PUSCH determined in step 3 can be transmitted, based on the semi-persistent uplink configuration and/or the SFI.

In another specific implementation, the cell in which the PUCCH is located may be determined based on the indication of the DCI. DCI 1 indicates that a low-priority (Low Priority, LP) HARQ-ACK is fed back in a slot n, and indicates that its cell is a cell 1. DCI 2 indicates that a LP HARQ-ACK is fed back in the slot n. In one manner, the UE expects that a cell in which a PUCCH indicated by the DCI 2 is located is the cell 1, otherwise it is an error scenario. In another manner, the UE determines a cell in which the LP HARQ-ACK feedback is located in the slot n, based on the indication of the DCI 2. For example, if the DCI 2 indicates that the HARQ-ACK is fed back in the cell 1, the UE feeds back HARQ-ACKs for PDSCHs corresponding to the DCI 1 and the DCI 2 in the cell 1 in the slot n. If the DCI 2 indicates that its cell is a cell other than the cell 1, such as a cell 2, the UE feeds back a HARQ-ACK in the cell 2 in the slot n. Optionally, any one of the following methods is used:
Method 1: In the slot n, the UE feeds back a HARQ-ACK for the PDSCH corresponding to the DCI 1 in the cell 1, and feeds back a HARQ-ACK for the PDSCH corresponding to the DCI 2 in the cell 2.
Method 2: In the slot n, the HARQ-ACKs for the PDSCHs corresponding to the DCI 1 and DCI 2 are fed back in the cell 2.
Method 3: In the slot n, only the HARQ-ACK for the PDSCH corresponding to the DCI 2 is fed back in the cell 2, and the HARQ-ACK for the PDSCH corresponding to the DCI 1 is not fed back.

In another embodiment, as shown in FIG. 7, DCI 1 and DCI 2 indicate that HARQ-ACKs are fed back in a same time unit, such as a slot n. However, their HARQ-ACKs correspond to different priorities, respectively. For example, the DCI 1 indicates LP, the DCI 2 indicates high-priority (High Priority, HP), and PUCCHs indicated by the DCI 1 and the DCI 2 are in different cells. Then any one of the following methods is used:
Method 1: In the slot n, the UE feeds back an LP HARQ-ACK and a HP HARQ-ACK on different cells, respectively, that is, the UE still feeds back a HARQ-ACK for the PDSCH corresponding to the DCI 1 in the cell 1, and feeds back a HARQ-ACK for the PDSCH corresponding to the DCI 2 in the cell 2.
Method 2: In the slot n, the UE feeds back the HP HARQ-ACK and the LP HARQ-ACK in the cell in which the HP HARQ-ACK is located, that is, feeds back the HARQ-ACKs for the PDSCHs corresponding to the DCI 1 and the DCI 2 in the cell 2.
Method 3: In the slot n, the UE feeds back the HP HARQ-ACK in the cell in which the HP HARQ-ACK is located, that is, only the HARQ-ACK for the PDSCH corresponding to the DCI 2 is fed back in the cell 2, and the HARQ-ACK for the PDSCH corresponding to the DCI 1 is not fed back.
Method 4: If the UE supports a PUCCH transmission on two cells at the same time, then method 1 is used; otherwise, method 2 or 3 is used.

In the prior art, the multiplexing/prioritization of a PUCCH and a PUCCH are both for PUCCHs in the same cell. When PUCCH resources are configurable in a plurality of cells, there may be a scenario in which PUCCHs are in different cells. As shown in FIG. 8, for example, DCI indicates that a HARQ-ACK is fed back in a cell 1, while a scheduling request (Scheduling Request, SR) is a configured UL transmission, which is determined to be in a cell 2 according to a PUCCH cell time pattern. In this case, any one of the following methods is performed:
Method 1: The UE determines a cell in which the PUCCH is located, based on the indication of the DCI.
Method 1-1: The UE multiplexes the SR and the HARQ-ACK into the PUCCH of the cell in which the HARQ-ACK is located.
Method 1-2: The SR is discarded, and only the HARQ-ACK is transmitted.
Method 1-3: When the HARQ-ACK PUCCH is a packet flow (Packet Flow, PF) 1 and the SR is the PF 1, the SR is discarded and the HARQ-ACK is transmitted. For the other cases, processing is performed according to the prior art.
Method 2: The UE determines the cell in which the PUCCH is located, based on HP UCI.
Method 3: (If the UE capability permits,) the UE performs transmissions on two different cells, respectively.

It should be noted that, the uplink transmission method provided by the embodiment of this application may be performed by an uplink transmission apparatus, or a module in the uplink transmission apparatus for executing and loading the uplink transmission method. In an embodiment of this application, the uplink transmission apparatus executing and loading the uplink transmission method is used as an example to illustrate the uplink transmission method provided by the embodiment of this application.

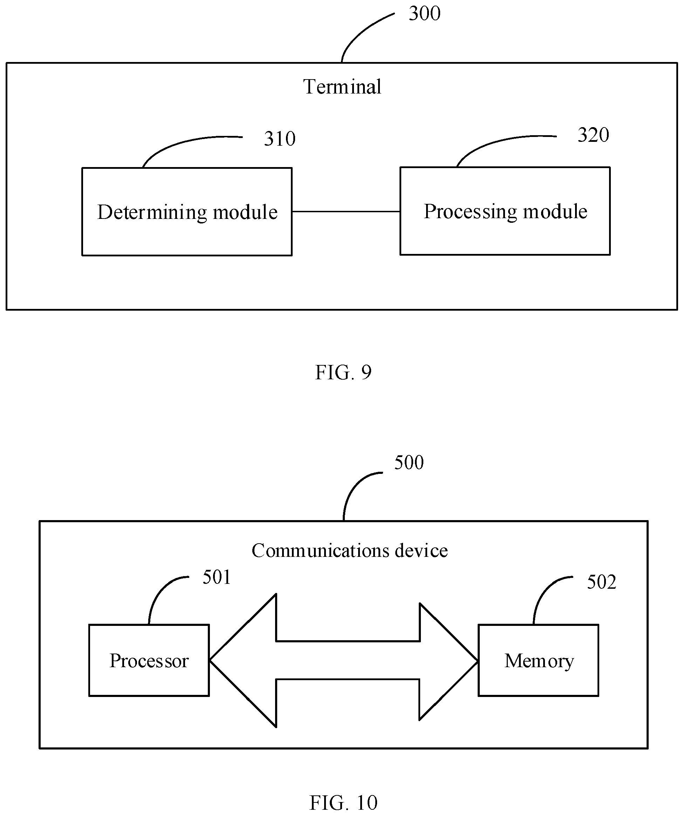

An embodiment of this application provides an uplink transmission apparatus, which is applied to a terminal 300. As shown in FIG. 9, the apparatus includes:
a determining module 310, configured to determine a cell in which a transmission of a first PUCCH is located; and
a processing module 320, configured to: in a case of overlapping time domain resources for the first PUCCH and a second uplink channel, determine whether to transmit the first PUCCH and/or the second uplink channel, based on semi-persistent uplink and downlink configuration information and/or an SFI, where the second uplink channel includes a second PUCCH and/or a second PUSCH.

In some embodiments, the determining module is specifically configured to perform the following:
determining the cell in which the transmission of the first PUCCH is located, based on at least one of an indication of DCI, a preset rule, the semi-persistent uplink and downlink configuration information, and the SFI.

In some embodiments, the determining module is specifically configured to perform any one of the following:
determining the cell in which the transmission of the first PUCCH is located, based on an indication of a specific information field in the DCI; or
determining a cell with available PUCCH resources, based on the semi-persistent uplink and downlink configuration information and/or the SFI.

In some embodiments, if it is determined that the number of cells with available PUCCH resources is greater than 1, a cell with a largest or smallest cell identifier is selected as the cell in which the first PUCCH is located.

In some embodiments, the cell in which the transmission of the first PUCCH is located is determined based on an indication of an information field in the last DCI.

In some embodiments, the apparatus further includes:
an index determining module configured to determine a resource index of the first PUCCH after the cell in which the transmission of the first PUCCH is located is determined.

In some embodiments, the apparatus further includes:
an index determining module configured to determine a resource index of the first PUCCH before the cell in which the transmission of the first PUCCH is located is determined.

In some embodiments, the index determining module is configured to determine the resource index of the first PUCCH when a HARQ-ACK feedback is required.

In some embodiments, for a HARQ-ACK codebook formed by PDSCHs scheduled by different DCIs, it is not expected that PUCCH cells indicated by the different DCIs are different.

In some embodiments, the second uplink channel includes the second PUCCH, and if the first PUCCH and the second PUCCH are in a same cell, the first PUCCH and the second PUCCH are multiplexed.

In some embodiments, the overlapping time domain resources for the first PUCCH and a second uplink channel includes at least one of the following:
overlapping time domain resources for the first PUCCH and the second PUCCH in a same cell; and
overlapping time domain resources for the first PUCCH and the second PUCCH in different cells within a same PUCCH group.

In some embodiments, in a case that the first PUCCH and the second PUCCH are in different cells, and a first cell in which the first PUCCH is located and a second cell in which the second PUCCH is located have different SCSs, a time unit for multiplexing of the first PUCCH is determined based an SCS of a third cell, where the third cell is selected from the first cell and the second cell.

In some embodiments, the third cell is determined based on any one of the following:
a cell in which a PUCCH is located as determined based on the indication of the DCI;
a cell of a PUCCH in which high-priority UCI is located based on the indication of the DCI;
a cell in which high-priority UCI is located;
a cell with a largest cell identifier; and
a cell with a smallest cell identifier.

The uplink transmission apparatus in this embodiment of this application may be an apparatus, an apparatus with an operating system or an electronic device, or may be a component, an integrated circuit, or a chip in a terminal. The apparatus or the electronic device may be a mobile terminal or a non-mobile terminal. For example, the mobile terminal may include, but is not limited to, the types of the terminal 11 listed above. The non-mobile terminal may be a server, a network attached storage (Network Attached Storage, NAS), a personal computer (personal computer, PC), a television (television, TV), a teller machine or a self-service machine, or the like, which is not specifically limited in the embodiments of this application.

The uplink transmission apparatus provided in this embodiment of this application can implement the processes that are implemented in the method embodiment of FIG. 3, with the same technical effects achieved. To avoid repetition, details are not described herein again.

Preferably, as shown in FIG. 10, an embodiment of this application further provides a communications device 500, including a processor 501, a memory 502, and a program or instructions stored on the memory 502 and capable of running on the processor 501. For example, when the communications device 500 is a terminal, upon the execution of the program or instructions by the processor 501, the processes of the embodiment of the foregoing uplink transmission method applied to a terminal are implemented, with the same technical effects achieved.

An embodiment of this application further provides a terminal, which includes a processor and a communications interface. The processor is configured to: determine a cell in which a transmission of a first PUCCH is located; and in a case of overlapping time domain resources for the first PUCCH and a second uplink channel, determine whether to transmit the first PUCCH and/or the second uplink channel, based on semi-persistent uplink and downlink configuration information and/or an SFI, where the second uplink channel includes a second PUCCH and/or a second PUSCH.

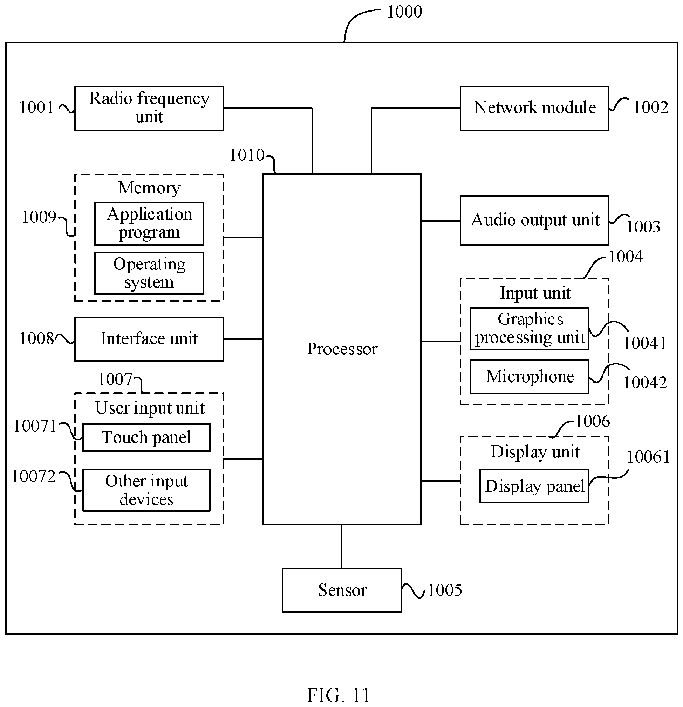

This terminal embodiment corresponds to the foregoing terminal-side method embodiment. Each implementation process and implementation of the foregoing method embodiment can be applied to this terminal embodiment, with the same technical effects achieved. Specifically, FIG. 11 is a schematic diagram of a hardware structure of a terminal implementing an embodiment of this application.

The terminal 1000 includes, but is not limited to, at least some of the components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Persons skilled in the art may understand that the terminal 1000 may further include a power supply (for example, a battery) that supplies power to various components. The power supply may be logically connected to the processor 1010 via a power management system, so that functions such as charging and discharging management and power consumption management are implemented by using the power management system. The terminal structure shown in FIG. 11 does not constitute a limitation to the terminal. The terminal may include more or fewer components than those shown in the figure, or some components may be combined, or there may be a different component arrangement. Details are not described herein.

It should be understood that in an embodiment of this application, the input unit 1004 may include a graphics processing unit (Graphics Processing Unit, GPU) 10041 and a microphone 10042. The graphics processing unit 10041 processes image data of a still image or a video obtained by an image capturing apparatus (for example, a camera) in a video capturing mode or an image capturing mode. The display unit 1006 may include a display panel 10061, and the display panel 10061 may be configured in the form of liquid crystal display, organic light-emitting diode, or the like. The user input unit 1007 includes a touch panel 10071 and other input devices 10072. The touch panel 10071 is also referred to as a touch screen. The touch panel 10071 may include two parts: a touch detection apparatus and a touch controller. The other input devices 10072 may include, but is not limited to, a physical keyboard, a functional button (such as a volume control button or a power on/off button), a trackball, a mouse, and a joystick. Details are not described herein.

In an embodiment of this application, the radio frequency unit 1001 receives downlink data from a network-side device, and then sends the downlink data to the processor 1010 for processing. In addition, uplink data is sent to the network-side device. Generally, the radio frequency unit 1001 includes, but is not limited to, an antenna, at least one amplifier, a transceiver, a coupler, a low noise amplifier, a duplexer, and the like.

The memory 1009 may be configured to store a software program or instructions and various data. The memory 1009 may mainly include a program or instruction storage area and a data storage area. The program or instruction storage area may store an operating system, an application program or instructions required by at least one function (for example, a sound playing function and an image playing function), and the like. In addition, the memory 1009 may include a high-speed random access memory, and may further include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. For example, the memory may be at least one magnetic disk storage device, a flash memory device, or another non-volatile solid-state storage device.

The processor 1010 may include one or more processing units. Optionally, the processor 1010 may integrate an application processor and a modem processor. The application processor mainly processes an operating system, a user interface, an application program or instructions, and the like. The modem processor, such as a baseband processor, mainly processes wireless communication. It should be understood that alternatively, the modem processor may not be integrated into the processor 1010.

The processor 1010 is configured to: determine a cell in which a transmission of a first PUCCH is located; and in a case of overlapping time domain resources for the first PUCCH and a second uplink channel, determine whether to transmit the first PUCCH and/or the second uplink channel, based on semi-persistent uplink and downlink configuration information and/or an SFI, where the second uplink channel includes a second PUCCH and/or a second PUSCH.

In some embodiments, the processor 1010 is specifically configured to perform the following:
determining the cell in which the transmission of the first PUCCH is located, based on at least one of an indication of DCI, a preset rule, the semi-persistent uplink and downlink configuration information, and the SFI.

In some embodiments, the processor 1010 is specifically configured to perform any one of the following:
determining the cell in which the transmission of the first PUCCH is located, based on an indication of a specific information field in the DCI; or
determining a cell with available PUCCH resources, based on the semi-persistent uplink and downlink configuration information and/or the SFI.

In some embodiments, if it is determined that the number of cells with available PUCCH resources is greater than 1, a cell with a largest or smallest cell identifier is selected as the cell in which the first PUCCH is located.

In some embodiments, the cell in which the transmission of the first PUCCH is located is determined based on an indication of an information field in the last DCI.

In some embodiments, the processor 1010 is configured to: after determining the cell in which the transmission of the first PUCCH is located, determine a resource index of the first PUCCH.

In some embodiments, the processor 1010 is configured to: before determining the cell in which the transmission of the first PUCCH is located, determine a resource index of the first PUCCH.

In some embodiments, the processor 1010 is configured to determine the resource index of the first PUCCH when a HARQ-ACK feedback is required.

In some embodiments, for a HARQ-ACK codebook formed by PDSCHs scheduled by different DCIs, it is not expected that PUCCH cells indicated by the different DCIs are different.

In some embodiments, the second uplink channel includes the second PUCCH, and if the first PUCCH and the second PUCCH are in a same cell, the first PUCCH and the second PUCCH are multiplexed.

In some embodiments, the overlapping time domain resources for the first PUCCH and a second uplink channel includes at least one of the following:
overlapping time domain resources for the first PUCCH and the second PUCCH in a same cell; and
overlapping time domain resources for the first PUCCH and the second PUCCH in different cells within a same PUCCH group.

In some embodiments, in a case that the first PUCCH and the second PUCCH are in different cells, and a first cell in which the first PUCCH is located and a second cell in which the second PUCCH is located have different SCSs, a time unit for multiplexing of the first PUCCH is determined based an SCS of a third cell, where the third cell is selected from the first cell and the second cell.

In some embodiments, the third cell is determined based on any one of the following:
a cell in which a PUCCH is located as determined based on the indication of the DCI;
a cell of a PUCCH in which high-priority UCI is located based on the indication of the DCI;
a cell in which high-priority UCI is located;
a cell with a largest cell identifier; and
a cell with a smallest cell identifier.

An embodiment of this application further provides a readable storage medium. The readable storage medium stores a program or instructions, and when the program or instructions are executed by a processor, the processes of the embodiment of the foregoing uplink transmission method are implemented, with the same technical effects achieved. To avoid repetition, details are not described herein again.

The processor is a processor in the terminal described in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communications interface, the communications interface and the processor are coupled to each other, and the processor is configured to run a program or instructions to implement the processes of the embodiment of the foregoing uplink transmission method, with the same technical effects achieved. To avoid repetition, details are not described herein again.

It should be understood that the chip mentioned in this embodiment of this application may also be referred to as a system-on-chip, a system chip, a chip system, a system on a chip, or the like.

An embodiment of this application additionally provides a computer program product. The computer program product is stored in a non-transitory storage medium. The computer program product is executed by at least one processor to implement the processes of the embodiment of the foregoing uplink transmission method, with the same technical effects achieved. To avoid repetition, details are not described herein again.

An embodiment of this application further provides a communications device, configured to perform the processes of the embodiment of the foregoing uplink transmission method, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a... " does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

Through the description of the foregoing embodiments, persons skilled in the art can clearly understand that the method of the foregoing embodiments can be implemented by means of software combined with a necessary universal hardware platform, and certainly, can also be implemented through hardware, but in many cases, the former is a better implementation. Based on such an understanding, the technical solutions of this application essentially or the part contributing to the prior art may be implemented in the form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The embodiments of this application are described above with reference to the accompanying drawings, but this application is not limited to the foregoing specific implementations. The foregoing specific implementations are merely illustrative instead of restrictive. Under the enlightenment of this application, persons of ordinary skills in the art may make many forms without departing from the essence of this application and the scope of protection of claims, all of which fall within the protection of this application.

## Claims

1. An uplink transmission method, performed by a terminal, comprising:
determining a cell in which a transmission of a first PUCCH is located; and
in a case of overlapping time domain resources for the first PUCCH and a second uplink channel, determining whether to transmit the first PUCCH and/or the second uplink channel, based on semi-persistent uplink and downlink configuration information and/or an SFI, wherein the second uplink channel comprises a second PUCCH and/or a second PUSCH.

2. The uplink transmission method according to claim 1, wherein the determining a cell in which a first PUCCH is located comprises:
determining the cell in which the transmission of the first PUCCH is located, based on at least one of an indication of DCI, a preset rule, the semi-persistent uplink and downlink configuration information, and the SFI.

3. The uplink transmission method according to claim 2, wherein the determining a cell in which a first PUCCH is located specifically comprises any one of the following:
determining the cell in which the transmission of the first PUCCH is located, based on an indication of a specific information field in the DCI; or
determining a cell with available PUCCH resources, based on the semi-persistent uplink and downlink configuration information and/or the SFI.

4. The uplink transmission method according to claim 3, wherein if it is determined that the number of cells with available PUCCH resources is greater than 1, a cell with a largest or smallest cell identifier is selected as the cell in which the first PUCCH is located.

5. The uplink transmission method according to claim 3, wherein the cell in which the transmission of the first PUCCH is located is determined based on an indication of an information field in the last DCI.

6. The uplink transmission method according to any one of claims 1 to 5, wherein after the determining a cell in which a transmission of a first PUCCH is located, the method further comprises:
determining a resource index of the first PUCCH.

7. The uplink transmission method according to any one of claims 1 to 5, wherein before the determining a cell in which a transmission of a first PUCCH is located, the method further comprises:
determining a resource index of the first PUCCH.

8. The uplink transmission method according to claim 6 or 7, wherein the resource index of the first PUCCH is determined when a HARQ-ACK feedback is required.

9. The uplink transmission method according to claim 6, wherein for a HARQ-ACK codebook formed by PDSCHs scheduled by different DCIs, it is not expected that PUCCH cells indicated by the different DCIs are different.

10. The uplink transmission method according to claim 1, wherein the second uplink channel comprises the second PUCCH, and if the first PUCCH and the second PUCCH are in a same cell, the first PUCCH and the second PUCCH are multiplexed.

11. The uplink transmission method according to claim 1, wherein the overlapping time domain resources for the first PUCCH and a second uplink channel comprises at least one of the following:
overlapping time domain resources for the first PUCCH and the second PUCCH in a same cell; and
overlapping time domain resources for the first PUCCH and the second PUCCH in different cells within a same PUCCH group.

12. The uplink transmission method according to claim 11, wherein in a case that the first PUCCH and the second PUCCH are in different cells, and a first cell in which the first PUCCH is located and a second cell in which the second PUCCH is located have different SCSs, a time unit for multiplexing of the first PUCCH is determined based an SCS of a third cell, wherein the third cell is selected from the first cell and the second cell.

13. The uplink transmission method according to claim 12, wherein the third cell is determined based on any one of the following:
a cell in which a PUCCH is located as determined based on the indication of the DCI;
a cell of a PUCCH in which high-priority UCI is located based on the indication of the DCI;
a cell in which high-priority UCI is located;
a cell with a largest cell identifier; and
a cell with a smallest cell identifier.

14. An uplink transmission apparatus, applied to a terminal, comprising:
a determining module, configured to determine a cell in which a transmission of a first PUCCH is located; and
a processing module, configured to: in a case of overlapping time domain resources for the first PUCCH and a second uplink channel, determine whether to transmit the first PUCCH and/or the second uplink channel, based on semi-persistent uplink and downlink configuration information and/or an SFI, wherein the second uplink channel comprises a second PUCCH and/or a second PUSCH.

15. The uplink transmission apparatus according to claim 14, wherein the determining module is specifically configured to determine the cell in which the transmission of the first PUCCH is located, based on at least one of an indication of DCI, a preset rule, the semi-persistent uplink and downlink configuration information, and the SFI.

16. The uplink transmission apparatus according to claim 15, wherein the determining module is specifically configured to perform any one of the following:
determining the cell in which the transmission of the first PUCCH is located, based on an indication of a specific information field in the DCI; or
determining a cell with available PUCCH resources, based on the semi-persistent uplink and downlink configuration information and/or the SFI.

17. The uplink transmission apparatus according to claim 16, wherein if it is determined that the number of cells with available PUCCH resources is greater than 1, a cell with a largest or smallest cell identifier is selected as the cell in which the first PUCCH is located.

18. The uplink transmission apparatus according to claim 16, wherein the cell in which the transmission of the first PUCCH is located is determined based on an indication of an information field in the last DCI.

19. The uplink transmission apparatus according to any one of claims 14 to 18, wherein the apparatus further comprises:
an index determining module configured to determine a resource index of the first PUCCH after the cell in which the transmission of the first PUCCH is located is determined.

20. The uplink transmission apparatus according to any one of claims 14 to 18, wherein the apparatus further comprises:
an index determining module configured to determine a resource index of the first PUCCH before the cell in which the transmission of the first PUCCH is located is determined.

21. The uplink transmission apparatus according to claim 19 or 20, wherein the index determining module is configured to determine the resource index of the first PUCCH when a HARQ-ACK feedback is required.

22. The uplink transmission apparatus according to claim 19, wherein for a HARQ-ACK codebook formed by PDSCHs scheduled by different DCIs, it is not expected that PUCCH cells indicated by the different DCIs are different.

23. The uplink transmission apparatus according to claim 14, wherein the second uplink channel comprises the second PUCCH, and if the first PUCCH and the second PUCCH are in a same cell, the first PUCCH and the second PUCCH are multiplexed.

24. The uplink transmission apparatus according to claim 14, wherein the overlapping time domain resources for the first PUCCH and a second uplink channel comprises at least one of the following:
overlapping time domain resources for the first PUCCH and the second PUCCH in a same cell; and
overlapping time domain resources for the first PUCCH and the second PUCCH in different cells within a same PUCCH group.

25. The uplink transmission apparatus according to claim 24, wherein in a case that the first PUCCH and the second PUCCH are in different cells, and a first cell in which the first PUCCH is located and a second cell in which the second PUCCH is located have different SCSs, a time unit for multiplexing of the first PUCCH is determined based an SCS of a third cell, wherein the third cell is selected from the first cell and the second cell.

26. The uplink transmission apparatus according to claim 25, wherein the third cell is determined based on any one of the following:
a cell in which a PUCCH is located as determined based on the indication of the DCI;
a cell of a PUCCH in which high-priority UCI is located based on the indication of the DCI;
a cell in which high-priority UCI is located;
a cell with a largest cell identifier; and
a cell with a smallest cell identifier.

27. A terminal, comprising: a processor, a memory, and a program or instructions stored on the memory and capable of running on the processor, wherein when the program or instructions are executed by the processor, the steps of the uplink transmission method according to any one of claims 1 to 13 are implemented.

28. A readable storage medium, wherein the readable storage medium stores a program or instructions, and when the program or instructions are executed by a processor, the steps of the uplink transmission method according to any one of claims 1 to 13 are implemented.
